# EUROPEAN PATENT SPECIFICATION

(11) **EP 3 056 367 B1**
(45) Date of publication and mention of the grant of the patent: **13.06.2018**
(21) Application number: 15153577.0
(22) Date of filing: 03.02.2015
(51) Int. Cl.: B60J 10/00, B60J 1/10

(54) **Vehicle glass guiding and sealing element**
Fahrzeugscheibenführungs- und -dichtungselement
Guidage de verre de véhicule et élément d'étanchéité

(43) Date of publication of application: 17.08.2016
(73) Proprietor: Standard Profil A.S., 34406 Istanbul (TR)
(72) Inventor: Yüksel, Hakki Tuncay, 68161 Mannheim (TR); Vartal, Koray, 45030 Manisa (TR); Mück, Thomas, 68161 Mannheim (DE); Atamer, Serkan, 81620 Duzce (TR); Akkuzu, Ahmet, 81620 Duzce (TR); Kostrzewa, Wojciech, 68161 Mannheim (DE)
(74) Representative: Hess, Peter K. G.

(56) References cited:
- EP-A2- 0 076 924
- WO-A1-2008/118903
- US-A- 4 761 916
- US-A1- 2006 156 632
- US-A1- 2009 072 581

## Description

### 1. Field of the invention

The present invention relates to a vehicle glass guiding and sealing element which is used preferably in the automotive industry particularly for the glazing of front and back doors with stationary and movable window panes.

### 2. Prior Art

In automotive it is known that front and back doors comprise stationary glass elements which are glued into an EPDM sealing to the front door or the back door of a car.

Further it is known, that the front and/or the back door of a car comprises a glass window pane that can be opened and closed by moving it up and down. To this end the door comprises glass guiding profiles connected to the door frame in which the glass pane is slidably supported.

From the document EP 0 076 924 B1 a triangular window for a motor vehicle door is known that is stationary arranged within the doorframe by means of a sealing profile. The sealing profile is made from PVC or rubber and is over molded over the rim portion of the triangular window. To this end a two component plastic injection molding apparatus is used.

Further, from the EP 0 524 092 B1 a method for the production of a window with integral sealing profile is known, in which a thermoplastic elastomer (TPE) is directly extruded by means of an extrusion head onto the rim portions of a vehicle glass pane.

WO 2008/118903 A1, which is considered to be the closest prior art, describes a division post for guiding a window panel moveable along a first axis in a motor vehicle. The division post may comprise a body portion comprising a first material and may further include a first and a second sealing wing. The first and the second sealing wing comprise a second material that is different than the first material.

US 2006/0156632 A1 describes a fixed window assembly adapted to be fixedly secured to a door of a motor vehicle having a retractable window pane. The assembly further includes a fixed window pane. The glass run for the retractable window is formed from a first moldable material. The encapsulation of the fixed window pane is formed from a second moldable material that is different from the first moldable material.

The glass panes produced in such way are conventionally mounted into the frame of a motor vehicle door. The same applies to additional sealing profiles like the top sealing of a motor vehicle door or guiding elements like glass guiding profiles for slidable glass windows.

In such conventional glazing systems problems arise with water and air tightness at the connection points of such individual sealing and guiding elements as well as with sound leaks or noise generation at the connection points. Further, such individual glazing and guiding elements require complex assembly steps wherein the elements have to be perfectly aligned to each other to guarantee a high sealing quality.

Therefore it is an object of the present invention to overcome these problems by providing an improved glazing system and method.

### 3. Summary of the invention

The above-mentioned problems are solved by a vehicle glass guiding and sealing element according to claim 1 and by a method for the production of a vehicle glass guiding and sealing element according claim 9. Preferred embodiments of the invention are described in the dependent claims.

Particularly a vehicle glass guiding and sealing element comprises a stationary glass pane, at least a first glass guiding profile for guiding a movable glass pane, and a sealing profile, wherein the sealing profile consists of a TPE molding material and is over molded to a rim portion of the stationary glass pane, and the first glass guiding profile is bonded to the stationary glass pane by over molding of the stationary glass pane under the first glass guiding profile by means of the same TPE molding material. This provides an integral vehicle glass guiding and sealing element which on the one hand comprises a stationary glass pane which is directly over molded by its sealing profile of a TPE molding material as well as a first glass guiding profile which is directly bonded to the stationary glass pane by means of the same TPE molding material that forms the sealing profile. By means of the TPE molding material there is a direct bonding of the first glass guiding profile to the stationary glass pane. Thus there is no need to separately assemble or bond the first glass guiding profile to the stationary glass. Further, due to the integral construction and over-molding The vehicle glass guiding and sealing element further is hundred percent water and air tight and has no sound leaks or the like. Noise generation is avoided since there are no connection areas of separate sealing profiles. Further the assembly process of this integrated module is improved and quality is increased since manual assembly steps are avoided.

Preferably the stationary glass pane at the TPE molding areas is coated with a primer, particularly a primer liquid, to improve adhesion of TPE molding material and stationary glass pane. The primer particularly a primer coating improves the adhesion of the TPE material that is over molded onto the glass pane.

The vehicle glass guiding and sealing element further comprises at least one glass holding clip, particularly a plastic glass holding clip, wherein the glass holding clip is arranged in contact with the stationary glass pane. The vehicle glass guiding and sealing element may comprise one or more glass holding clips that hold the stationary glass pane during the injection molding process. Thus the stationary glass pane maintains its specific position within the vehicle glass guiding and sealing element during the over molding process performed in an injection molding form. Further, the glass holding clips may extend through the sealing profile and can form assembly means for the vehicle glass guiding and sealing element to the doorframe or car body of a car.

Preferably the glass guiding and sealing element further comprises a second glass guiding profile for guiding the movable glass pane, wherein the second glass guiding profile is connected to the vehicle glass guiding and sealing element by means of the same TPE molding material and/or a front door profile, wherein the front door profile is connected to the vehicle glass guiding and sealing element by means of the same TPE molding material. In a further embodiment, the vehicle glass guiding and sealing element additionally comprises a second glass guiding profile that is arranged opposite to the first glass guiding profile in order to guide the movable glass pane from both sides. Like for the first glass guiding profile the second glass guiding profile and/or the front profile is connected to the vehicle glass guiding and sealing element by means of the same TPE molding material. Thus, also the second glass guiding profile and/or the front profile is perfectly connected to the vehicle glass guiding and sealing element by means of the TPE molding material which was injection molded in one injection molding process. Therefore, also for this element no further assembly steps are required, water- and air-tightness is improved and the noise generation is minimized.

Preferably the glass guiding profile comprises of an EPDM, or a TPE, or a rubber material. These materials are preferred for the glass guiding profiles. Likewise the front profile can comprise an EPDM, or a TPE, or a rubber material.

Preferably the glass guiding profiles further comprises a reinforcement profile, particularly a steel, aluminum or plastic reinforcement profile, and/or a U-shaped glass guiding section for receiving the movable glass pane, wherein the glass guiding section is covered with a flocking material to reduce friction. The glass guiding profiles can be further improved by reinforcement profiles that increase the strength of the glass guiding profile required for a perfect guiding of the movable glass pane. A flocking of a U-shaped glass guiding section reduces the friction between the rubber like material of the glass guiding profile and the movable glass pane and avoids squeaking noises.

Preferably the vehicle glass guiding and sealing element further comprises a top sealing profile connected to the stationary glass pane by means of the same TPE molding material. Further, a top sealing profile can also be integrated into the vehicle glass guiding and sealing element and can be connected to the other parts of the glass guiding and sealing element and to the stationary glass pane by means of the same TPE molding material. Thus also for this top sealing profile no further assembly steps, sealing steps, adjusting steps or the like are required and a perfect air- and water-tight connection is provided.

Preferably the top sealing profile comprises of EPDM, TPE or rubber and/or comprises a glass receiving channel for receiving the movable the glass pane.

Preferably the top sealing profile further comprises a reinforcement profile, particularly a steel, aluminum or plastic reinforcement profile. The reinforcement profile increases the mechanical stability of the comparably soft EPDM, TPE or rubber-like material.

A method according to the invention for the production of a vehicle glass guiding and sealing element comprises the following steps:
a. inserting a stationary glass pane into an injection molding form;
b. inserting a first glass guiding profile for guiding a movable glass pane into the injection molding form;
c. injection molding of a TPE molding material to at least a rim portion of the stationary glass pane in order to produce a sealing profile that is over-molded to the stationary glass pane;
d. injection molding of the TPE molding material between the first glass guiding profile and the stationary glass pane in order to bond the first glass guiding profile to the stationary glass pane; wherein
e. the injection molding steps are performed during the same injection molding process.

This method uses the same injection molding process for molding a TPE molding material to on the one hand produce a sealing profile that is over molded to the stationary glass pane and on the other hand to bond the first glass guiding profile to the stationary glass pane by the same TPE molding material in one injection molding process. Therefore, in one single injection molding process an over-molded sealing profile for the stationary glass pane as well as the connection of further elements - like the first glass guiding profile - to the stationary glass pane is obtained. This manufacturing method reduces assembly efforts to a minimum and produces a vehicle glass guiding and sealing element which has an optimized quality in view of air- and water-tightness, minimized sound leaks and minimized noise generation.

Preferably the method for the production of a vehicle glass guiding and sealing element further comprises the step of coating the stationary glass pane at the TPE over molding areas with a primer, particularly by a primer liquid, to improve adhesion of TPE molding material and stationary glass pane. The primer improves adhesion of the over-molded TPE molding material and the glass surface.

The method for the production of a vehicle glass guiding and sealing element further comprises the step of inserting at least one glass holding clip into the injection molding form in order to hold the stationary glass pane in place during the injection molding step. Thus the stationary glass pane cannot move during injection molding of the TPE molding material which requires high speed and high pressure.

Preferably the method for the production of a vehicle glass guiding and sealing element further comprises the steps of inserting a top sealing profile into the injection molding form and injection molding of the TPE molding material between the top sealing profile and the stationary glass pane in order to bond the top sealing profile to the stationary glass pane during the same injection molding step. Thus the top sealing profile is directly integrated and sealed to the other elements of the vehicle glass guiding and sealing element by means of one single injection molding step.

Preferably the method for the production of a vehicle glass guiding and sealing element further comprises the step of:
a. inserting a second glass guiding profile into the injection molding form, wherein the second glass guiding profile is used for guiding the movable glass pane, and
b injection molding of the TPE molding material between the second glass guiding profile and the top sealing profile for connecting to top sealing profile with the second glass guiding profile by means of the TPE molding material during the same injection molding step.

Preferably the method for the production of a vehicle glass guiding and sealing element further comprises the step of separately heating areas of the injection molding form wherein the areas correspond to the areas wherein the TPE material contacts the first and/or the second glass guiding profile and/or the top sealing profile and/or the stationary glass pane. By selectively adjusting the temperature in heating areas of the injection molding form the bonding of the injected TPE material to rubberlike materials like EPDM, rubber or TPE or to the glass is improved.

### 4. Short description of the drawings

In the following preferred embodiments of the invention are described in respect to the drawings in which shows:
- Fig. 1: a site view of a first embodiment of a vehicle glass guiding and sealing element according to the invention, for a back door of a motor vehicle;
- Fig. 2: shows a second embodiment of a vehicle glass guiding and sealing element according to the invention, for the front door of a motor vehicle;
- Fig. 3: shows a detailed view of the rear part of the vehicle glass guiding and sealing element according Fig. 1;
- Fig. 4:: shows a detailed view of the front part of the vehicle glass guiding and sealing element according Fig. 2;
- Fig. 5: shows a three-dimensional view of a stationary glass pane held by a glass holding clip;
- Fig. 6: shows a three-dimensional sectional view of a vehicle glass guiding and sealing element of Fig. 1 or 2 cut through a glass holding clip;
- Fig. 7: shows a two-dimensional view of a stationary glass pane of the embodiment of Fig. 1 and 3 with a primer application area;
- Fig. 8: shows a sectional view through the top part of a vehicle glass guiding and sealing element according to Fig. 1 or 2;
- Fig. 9: shows a sectional view of a rear part of a vehicle glass guiding and sealing element according to Fig. 1 or 2;
- Fig. 10: shows a sectional view through a first glass guiding profile of a vehicle glass guiding and sealing element according to Fig. 1 or 2;
- Fig. 11: shows an assembly tree with assembly and manufacturing steps for a vehicle glass guiding and sealing element according to Fig 1; and
- Fig. 12: shows an assembly tree with assembly and manufacturing steps for a vehicle glass guiding and sealing element according to Fig 2.

### 5. Description of the preferred embodiments

In the following preferred embodiments of the invention are described in respect to the figures.

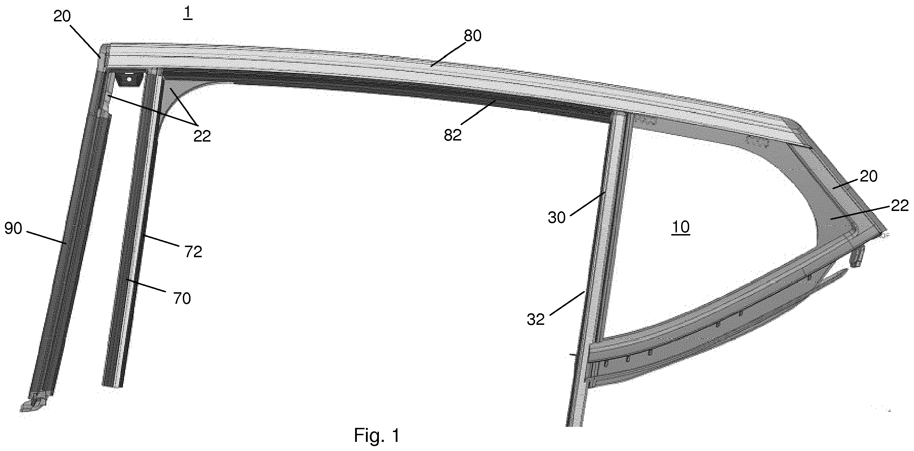

Fig. 1 shows a vehicle glass guiding and sealing element 1 comprising a stationary glass pane 10, a first glass guiding profile 30 for guiding a movable glass pane 130, a second glass guiding profile 70 for guiding the movable glass pane 130, a top sealing profile 80 for receiving the movable glass pane 130, and a front profile 90 for sealing the rear edge of the front door at the B-pillar of a motor vehicle. Further the vehicle glass guiding and sealing element 1 comprises a sealing profile 20 that basically connects all mentioned components with each other. The sealing profile 20 consists of a TPE (Thermoplastic Elastomer) molding material. TPE materials are a class of copolymers or a physical mix of polymers (usually a plastic material and a rubber) which consists of materials with both thermoplastic and elastomeric properties. Thus, TPE materials can be preferably used for injection molding. The TPE material is injection molded over a rim portion 12 of the stationary glass pane 10 and at least under the first glass guiding profile 30, to connect the first glass guiding profile 30 to the stationary glass pane 10. Further, the molded TPE molding material 22 by itself forms the sealing profile 20. Thus, the TPE molding material 22 after injection molding provides on the one hand a sealing profile 20 and on the other hand forms a connection and integration element of at least the first glass guiding profile 30 and the stationary glass pane 10. Further, the injection molded TPE molding material 22 is also over or under molded to the top sealing profile 80, the second glass guiding profile 70 and the auxiliary front profile 90 to connect all these elements together and to form an integral vehicle glass guiding and sealing element 1. The profiles 30, 70, 80 and 90 preferably consisist mainly of a EPDM material and may include reinforcement elements or profiles (e.g. reinforcement profile 84 of top sealing profile 80) out of steel, aluminum or hard plastic material.

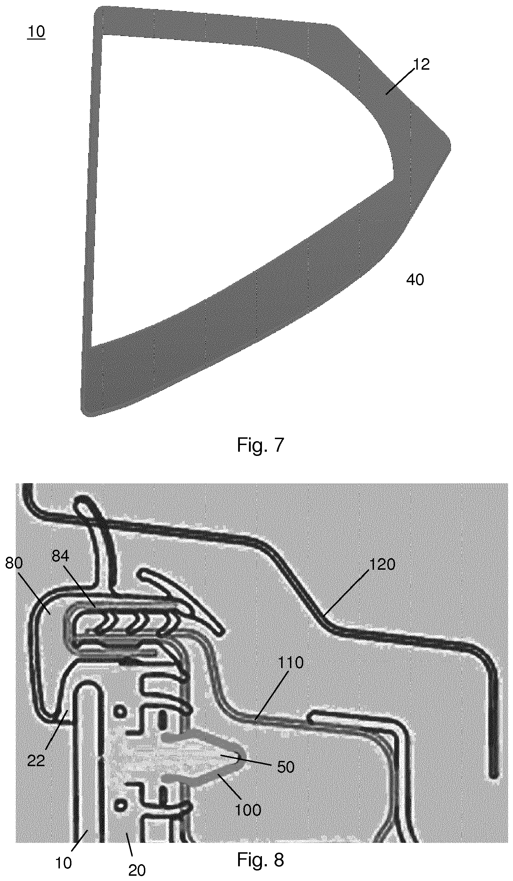

In order to improve the adhesion of the TPE molding material 22 to the stationary glass pane 10 the stationary glass pane 10 is coated with a primer 40, particularly by a primer liquid, at TPE molding areas 12 of the glass pane 10. The primer 40 is perferably water or solvent based. Exemplary TPE molding areas 12 of a stationary glass pane 10 are shown in figure 7. Usually the TPE molding areas 12 correspond to the rim portions 12 of the stationary glass pane 10. The primer 40 is applied to the glass pane 10 by spaying, or screen printing and cured at a necessary temperature for the necessary time.

The stationary glass pane 10 consists preferably of a laminated glass pane, VSG, tempered glass, ESG, PC, PMMA, etc. which are used for automotive applications.

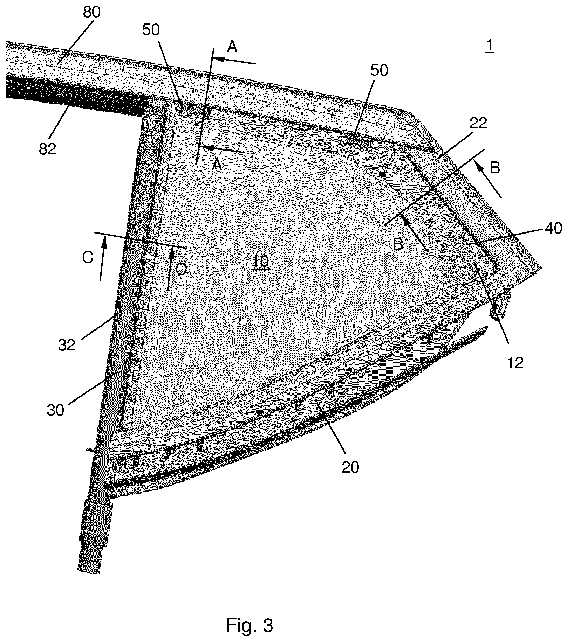

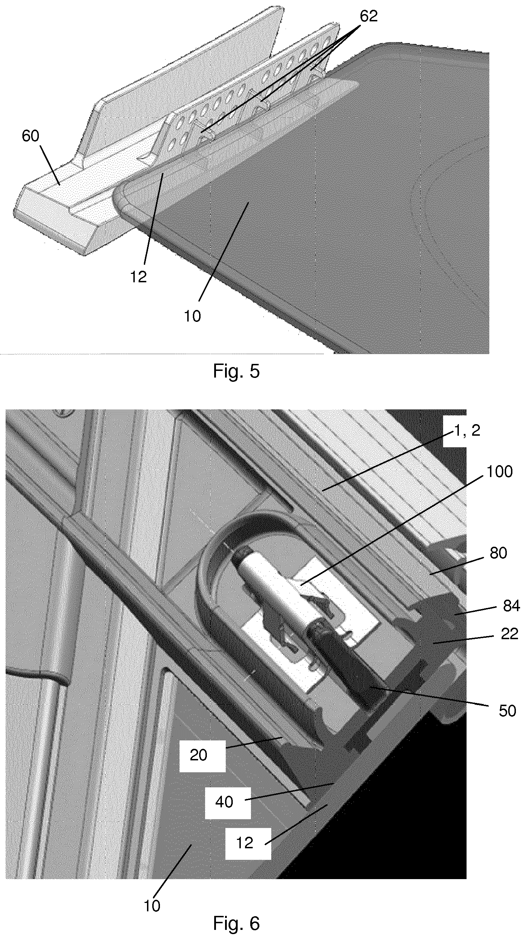

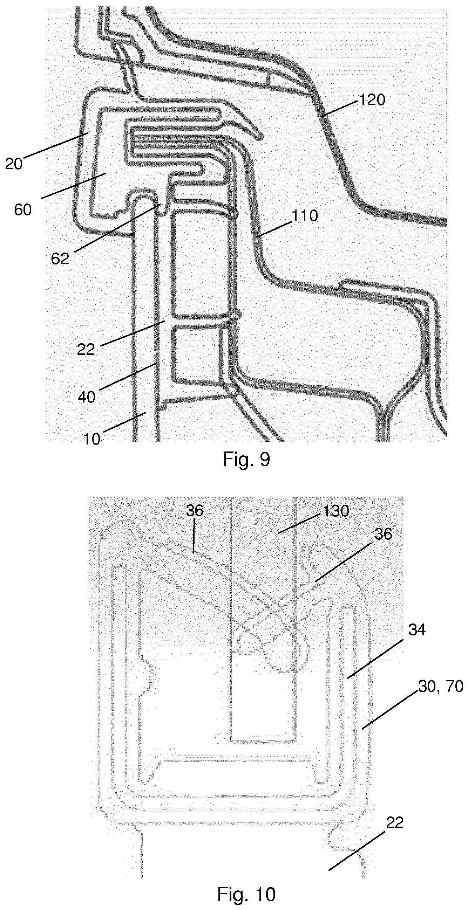

Figure 3 shows a rear detail of the vehicle glass guiding and sealing element 1 according figure 1. The TPE injection molded sealing profile 20 forms a complex sealing structure which perfectly seals the stationary glass pane 10 with the car body of the vehicle. In view to the injection molding process the sealing is water- and air-tight and protects the interior from noise. Further due to the integral manufacturing method less noise is generated in use. The vehicle glass guiding and sealing element 1 further comprises at least one glass holding clip 50, 60, preferably three or four glass holding clips 50, 60. They are in contact with the stationary glass pane 10 in order to fix it during the injection molding of the sealing profile 20. Further the glass holding clip 50 can serve as mounting means, of the final vehicle glass guiding and sealing element 1, 2. Likewise the glass holding clip 60 can serve as reinforcing element for the sealing profile 20, see figures 5 and 9.

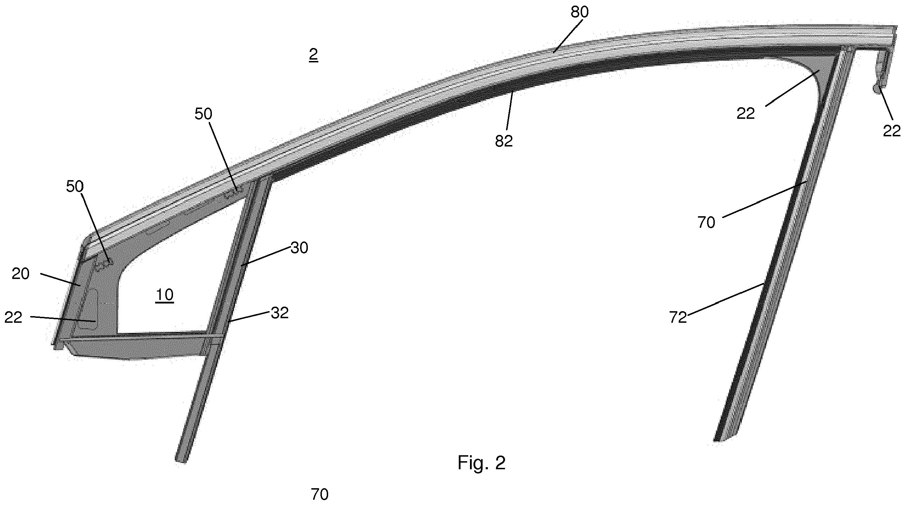

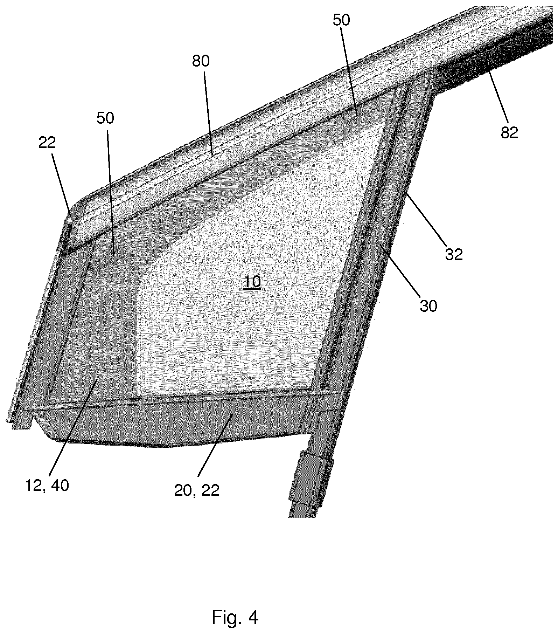

Whereas figures 1 and 3 show a vehicle glass guiding and sealing element 1 for the back door of a motor vehicle figures 2 and 4 show a comparable vehicle glass guiding and sealing element 2 for the front door of a motor vehicle. As the elements of the front door vehicle glass guiding and sealing element 2 essentially correspond to the elements of the back door vehicle glass guiding and sealing element 1 the same reference numbers are used for the sealing profile 20, the stationary glass pane 10, the first glass guiding profile 30, the second glass guiding profile 70 and the top sealing profile 80. Figure 5 shows a U-shaped glass holding clip 60 arranged in contact with the stationary glass pane 10 in order to hold it during the TPE injection molding process. To this end the glass holding clip 60 comprises U-shaped holding brackets that support the edge of the stationary glass pane 10. As it can be seen in the section of fig. 9 the U-shaped glass holding clip 60 is over-molded by the TPE molding material 22 to additionally form a reinforcing element for the sealing profile 20. The glass holding clip 60 preferably is a plastic glass holding clip 60 made preferably of a PP material.

In figure 6 details of the plastic glass holding clip 50 and the over molding of the TPE molding material 22 over a rim portion 12 of the stationary glass pane 10 and the connection of the top guiding profile 80 to the stationary glass pane 10 by the TPE molding material 22 is shown. The glass holding clip 50 preferably is also a plastic glass holding clip 50 made preferably of a PP or a PA material. The sealing profile 20 made of the TPE molding material 22 is over molded onto a rim portion 12 of the stationary glass pane 10 and also partially over molds the plastic glass holding clip 50. It further partially over molds the stationary glass pane 10 to connect the top sealing profile 80 to the glass pane 10 and to the sealing profile 20. A metal clip 100 is pushed onto a plastic glass holding clip 50. The metal clip 100 is used to fix the vehicle glass guiding and sealing element 1, 2 to the car body or door frame 110 of a motor vehicle as it can be seen in fig. 8.

Fig. 6 shows that by one injection molding step of TPE molding material 22 the individual components of the vehicle glass guiding and sealing element 1, 2 are connected with each other and perfectly sealed to each other. This eliminates complex manufacturing and assembly steps and improves the sealing quality of the overall vehicle glass guiding and sealing element 1, 2.

Fig. 7 shows the exemplary stationary glass pane 10 of the embodiment of fig. 1 and the primer 40 applied to the edge portions 12 of the stationary glass pane 10. Here the edge portions 12 of the stationary glass pane 10 correspond to the TPE molding areas.

Figure 8 shows a sectional view through the glass guiding and sealing element 1, 2 along line A - A of figure 3. The sectional view shows that the vehicle glass guiding and sealing element 1 is connected to the top metal doorframe 110 via the EPDM or optionally TPE top sealing profile 80 and by the metal clips 100 on the plastic glass holding clips 50. Further, figure 8 shows parts of the door trim 120 and the sealing of top sealing profile 80 to the door trim 120.

Figure 9 shows a sectional view according line B - B of figure 3. The stationary glass pane 10 is held in place by clip 60 of figure 5 during injection molding of TPE material 22 around and under the stationary glass pane 10. The TPE molding material 22 forms a sealing profile 20 that surrounds completely clip 60 and thus forms a perfect air and water thight sealing 20 around the rim and edge of the stationary glass pane 10. In the area where the TPE molding material 22 is over molded to the stationary glass pane 10 it is coated by a primer 40.

The vehicle glass guiding and sealing element 1 of Fig. 9 is connected to the doorframe 110 by means of the sealing profile 20 which is over molded over the plastic glass holding clip 60. The glass holding 60 further comprises a U-profile in order to reinforce the sealing profile 20 in the connection area to the doorframe 110.

Figure 10 shows a section along line C - C of figure 3. The first glass guiding profile 30 out of EPDM or optionally TPE is connected to the TPE material 22. The glass guiding profile 30 comprises a U-shaped glass guiding section 32 for receiving a movable glass pane 130. Further the glass guiding profile 30 comprises a reinforcement profile 34 particularly a steel or plastic reinforcement profile 34 to increase the mechanical stability of the U-shaped glass guiding section 32. The first glass guiding profile 30 shown in figure 10 basically corresponds to the second glass guiding profile 70 which is oppositely arranged on the vehicle glass guiding and sealing element 1, 2.

In order to reduce friction between the glass guiding section 32, 72 and the movable glass pane 130 the glass guiding section 32, 72 is covered with a flocking material 36.

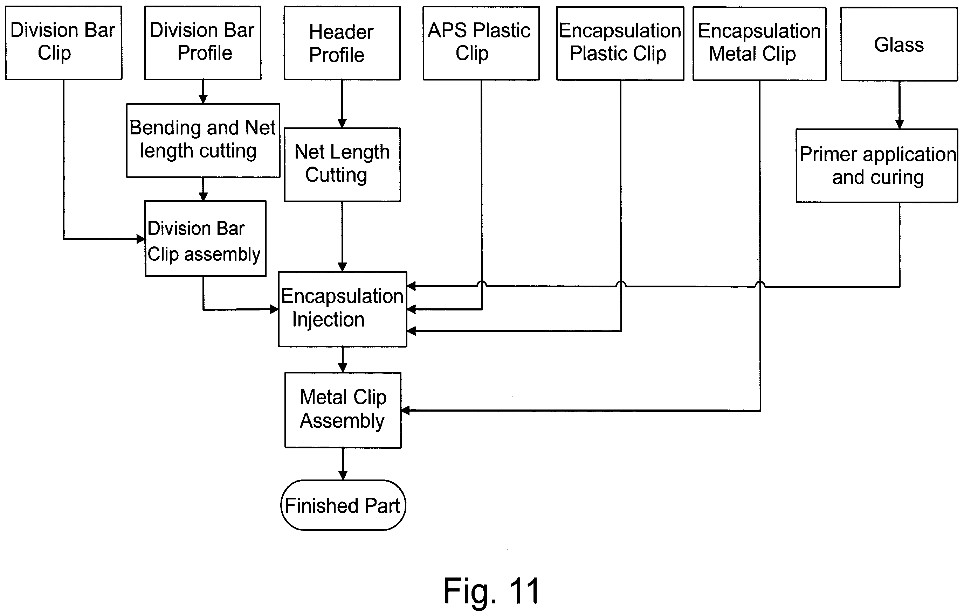

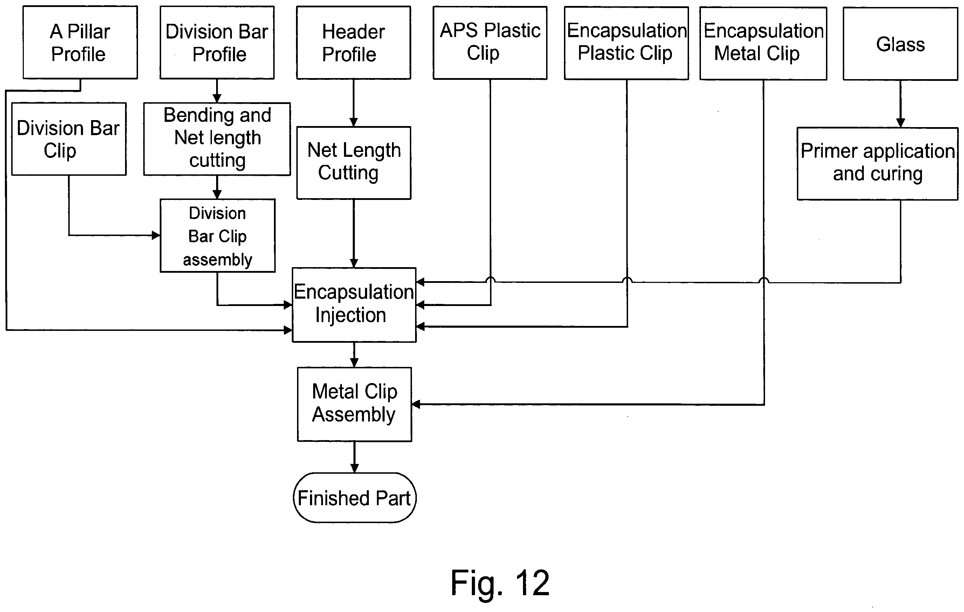

Figure 11 shows an exemplary assembly tree for a vehicle glass guiding and sealing element 1 for the back door of a motor vehicle. Figure 12 shows an exemplary assembly tree for a vehicle glass guiding and sealing element 2 of the front door of a motor vehicle.

A method for the production of a vehicle glass guiding and sealing element 1, 2 thus comprises the following steps:
a. inserting a stationary glass pane 10 into an injection molding force form;
b. inserting a first glass guiding profile 30 for guiding a movable glass pane 130 into the injection molding form;
c. injection molding of the TPE molding material 22 to at least a rim portion 12 of the stationary glass pane 10 in order to produce a sealing profile 20 that is over molded to the stationary glass pane 10;
d. injection molding of the TPE molding material 22 between the first glass guiding profile 30 and the stationary glass pane 10 in order to bond the first glass guiding profile 30 to the stationary glass pane 10; wherein
e. the injection molding steps are performed during the same injection molding process.

In order to improve the adhesion of the TPE molding material 22 and the stationary glass pane 10 a further step of coating the stationary glass pane 10 at the TPE over molding areas 12 with a primer 40 is provided. Particularly for the coating a primer liquid is used that is sprayed on or screen printed onto the rim portions 12 of the glass pane 10. The primer 40 also ensures that at higher temperatures there is no separation of TPE material 20 or TPE sealing profile from the glass 10. Therefore acoustic isssues, dust or water leakage problems are avoided.

Further, during the production method at least one glass holding clip 50, 60 is inserted into the injection molding form in order to hold the stationary glass pane 10 in place during the injection molding step. This ensures the correct positioning of the glass pane 10 within the final product. Further a top sealing profile 80 can be inserted into the injection molding form such that the TPE molding material 22 is injection molded between the top sealing profile 80 and the stationary glass pane 10 in order to bond the top sealing profile 80 to the stationary glass pane 10 during the same injection molding step. This can be seen for example in the detail of figure 6.

Likewise a second glass guiding profile 70 can be inserted into the injection molding form wherein the second glass guiding profile 70 is used for guiding the movable glass pane and the TPE molding material 22 is injection molded between the second glass guiding profile 70 and the top sealing profile 80 for connecting the top sealing profile 80 with the second glass guiding profile 70 by means of the TPE molding material 22 during the same injection molding step. This can be seen in figures 1 and 2. Thus the TPE molding material on the one hand provides a perfect sealing and forms a sealing profile 20 and on the other hand connects pre-manufactured sealing profiles together like the first and second glass guiding profile 30, 70, the top sealing profile 80 and the front door profile 90 in order to form an integral vehicle glass guiding and sealing profile 1, 2. Prior to insertion the the first and second glass guiding profile 30, 70, the top sealing profile 80 and the front door profile 90 are cut or ground to the desired length or seperately injection molded.

In order to improve the adhesion of the TPE molding material 22 to the pre-manufactured sealing profiles 30, 70, 80 and 90 and to the glass pane 10 the injection molding form can be separately heated in particular areas which correspond to the areas where the TPE material contacts the first and/or the second glass guiding profile and/or the top sealing profile and/or the front door profile. Thus, depending on the material to which the TPE material 22 should adhere the perfect temperature can be adjusted in one single injection molding form. This improves the sealing quality of the overall vehicle glass guiding and sealing element 1, 2.

The TPE material 22 is preferably injected into the injection molding form by a hot runner with cascade control. The injectors thereof are arranged close to the trimming regions of the profiles 30, 70, 80, 90 inserted into the injection molding form. Thus, the necessary injection quantity of the TPE material 22 in necessary temperature can be injected thorougliy into the mold via specially chosen injection points. This ensures that the stationary glass pane 10 does not break.

## Claims

1. Vehicle glass guiding and sealing element (1, 2) comprising:
a. a stationary glass pane (10);
b. at least a first glass guiding profile (30) for guiding a movable glass pane (130); and
c. a sealing profile (20); wherein
d. the sealing profile (20) consists of a TPE molding material (22) and is over-molded to a rim portion (12) of the stationary glass pane (10); and
e. the first glass guiding profile (30) is bonded to the stationary glass pane (10) by over-molding of the stationary glass pane (10) under the first glass guiding profile (30) by means of the same TPE molding material (22); **characterized by**
f. at least one glass holding clip (50, 60), wherein the glass holding clip (50, 60) is arranged in contact with the stationary glass pane (10).

2. Vehicle glass guiding and sealing element according to claim i, wherein the stationary glass pane (10) at the TPE molding areas is coated with a primer (40), particularly by a primer liquid, to improve adhesion of TPE molding material (22) and stationary glass pane (10).

3. Vehicle glass guiding and sealing element according to one of the claims 1 to 2, further comprising:
a. a second glass guiding profile (70) for guiding the movable glass pane (130), wherein the second glass guiding profile (70) is connected to the vehicle glass guiding and sealing element (1, 2) by means of the same TPE molding material (22) and/or
b. a front door profile (90), wherein the front profile (90) is connected to the vehicle glass guiding and sealing element (1, 2) by means of the same TPE molding material (22).

4. Vehicle glass guiding and sealing element according to one of the claims 1 to 3, wherein the glass guiding profile (30, 70) comprises of an EPDM, or a TPE or a rubber material.

5. Vehicle glass guiding and sealing element according to one of the claims 1 to 4, wherein the glass guiding profile (30, 70) further comprises:
a. a reinforcement profile (34), particularly a steel, aluminum or plastic reinforcement profile; and/or
b. a U-shaped glass guiding section (32, 72) for receiving the movable glass pane (130), wherein the glass guiding section (32, 72) is covered with a flocking material (36) to reduce friction.

6. Vehicle glass guiding and sealing element according to one of the claims 1 to 5, further comprising a top sealing profile (80) connected to the stationary glass pane (10) by means of the same TPE molding material (22).

7. Vehicle glass guiding and sealing element according to claim 6, wherein the top sealing profile (80) comprises of EPDM or rubber and/or comprises a glass receiving channel (82) for receiving the movable glass pane.

8. Vehicle glass guiding and sealing element according to one of the claim 6 or 7, wherein the top sealing profile (80) further comprises a reinforcement profile (84), particularly a steel, aluminium or plastic reinforcement profile.

9. Method for the production of a vehicle glass guiding and sealing element (1, 2), the method comprising the following steps:
a. inserting a stationary glass pane (10) into an injection molding form;
b. inserting a first glass guiding profile (30) for guiding a movable glass pane into the injection molding form;
c. injection molding of a TPE molding material (22) to at least a rim portion (12) of the stationary glass pane (10) in order to produce a sealing profile (20) that is over-molded to the stationary glass pane (10);
d. injection molding of the TPE molding material (22) between the first glass guiding profile (30) and the stationary glass pane (10) in order to bond the first glass guiding profile (30) to the stationary glass pane (10); wherein
e. the injection molding steps are performed during the same injection molding process; **characterized by**
f. inserting at least one glass holding clip (50, 60) into the injection molding form in order to hold the stationary glass pane (10) in place during the injection molding step.

10. Method for the production of a vehicle glass guiding and sealing element according claim 9, further comprising the step of coating the stationary glass pane (10) at the TPE over-molding areas (12) with a primer (40), particularly by a primer liquid, to improve adhesion of TPE molding material (22) and stationary glass pane (10).

11. Method for the production of a vehicle glass guiding and sealing element according to one of the claims 9 to 10 further comprising the steps of
a. inserting a top sealing profile (80) into the injection molding form; and
b. injection molding of the TPE molding material (22) between the top sealing profile (80) and the stationary glass pane (10) in order to bond the top sealing profile (80) to the stationary glass pane (10) during the same injection molding step.

12. Method for the production of a vehicle glass guiding and sealing element according to one of the claims 9 to 11 further comprising the step of:
a. inserting a second glass guiding profile (70) into the injection molding form, wherein the second glass guiding profile (70) is used for guiding the movable glass pane; and
b. injection molding of the TPE molding material (22) between the second glass guiding profile (70) and the top sealing profile (80) for connecting the top sealing profile (80) with the second glass guiding profile (70) by means of the TPE molding material (22) during the same injection molding step.

13. Method for the production of a vehicle glass guiding and sealing element according to one of the claims 9 to 12 further comprising the step of separately heating areas of the injection molding form, wherein the areas correspond to the areas wherein the TPE material (22) contacts the first and/or the second glass guiding profile (30, 70) and/or the top sealing profile (80).

## Patentansprüche

1. Fahrzeugglasführungs- und Dichtungselement (1, 2) aufweisend:
a. eine stationäre Glasscheibe (10);
b. zumindest ein erstes Glasführungsprofil (30) zum Führen einer beweglichen Glasscheibe (130); und
c. ein Dichtungsprofil (20); wobei
d. das Dichtungsprofil (20) aus einem TPE Formstoff (22) besteht und auf einen Randbereich (12) der stationären Glasscheibe (10) überspritzt ist; und
e. das erste Glasführungsprofil (30) an die stationäre Glasscheibe (10) durch überspritzen der stationären Glasscheibe (10) unter dem ersten Glasführungsprofil (30) mit Hilfe desselben TPE Formstoffs (22) gebunden ist; **gekennzeichnet durch**
f. zumindest einen Glashalteclip (50, 60), wobei der Glashalteclip (50, 60) in Kontakt mit der stationären Glasscheibe (10) angeordnet ist.

2. Fahrzeugglasführungs- und Dichtungselement nach Anspruch 1, wobei die stationäre Glasscheibe (10) in den TPE Formgebieten mit einer Grundierung (40) beschichtet ist, insbesondere mit einer Grundierungsflüssigkeit, um die Haftung des TPE Formstoffs (22) und der stationären Glasscheibe (10) zu verbessern.

3. Fahrzeugglasführungs- und Dichtungselement nach einem der Ansprüche 1 bis 2, weiterhin aufweisend:
a. ein zweites Glasführungsprofil (70) zum Führen der beweglichen Glasscheibe (130), wobei das zweite Glasführungsprofil (70) mit dem Fahrzeugglasführungs- und Dichtungselement (1, 2) mit Hilfe desselben TPE Formstoffs (22) verbunden ist und/oder
b. ein Vordertürprofil (90), wobei das Vordertürprofil (90) mit dem Fahrzeugglasführungs- und Dichtungselement (1, 2) mit Hilfe desselben TPE Formstoffs (22) verbunden ist.

4. Fahrzeugglasführungs- und Dichtungselement nach einem der Ansprüche 1 bis 3, wobei das Glasführungsprofil (30, 70) ein EPDM oder ein TPE oder ein Gummimaterial aufweist.

5. Fahrzeugglasführungs- und Dichtungselement nach einem der Ansprüche 1 bis 4, wobei das Glasführungsprofil (30, 70) weiterhin aufweist:
a. ein Verstärkungsprofil (34), insbesondere ein Stahl, Aluminium oder Kunststoff-Verstärkungsprofil; und/oder
b. einen U-förmigen Glasführungsabschnitt (32, 72) zum Aufnehmen der beweglichen Glasscheibe (130), wobei der Glasführungsabschnitt (32, 72) mit einem Beflockungsmaterial (36) überdeckt ist, um Reibung zu reduzieren.

6. Fahrzeugglasführungs- und Dichtungselement nach einem der Ansprüche 1 bis 5, weiterhin aufweisend ein oberes Dichtungsprofil (80), das mit der stationären Glasscheibe (10) mit Hilfe desselben TPE Formstoffs (22) verbunden ist.

7. Fahrzeugglasführungs- und Dichtungselement nach Anspruch 6, wobei das obere Dichtungsprofil (80) EPDM oder Gummi aufweist und/oder einen Glasaufnahmekanal (82) zum Aufnehmen der beweglichen Glasscheibe.

8. Fahrzeugglasführungs- und Dichtungselement nach einem der Ansprüche 6 oder 7, wobei das obere Dichtungsprofil (80) weiterhin ein Verstärkungsprofil (84) aufweist, insbesondere ein Stahl, Aluminium oder Kunststoff-Verstärkungsprofil.

9. Verfahren für die Herstellung eines Fahrzeugglasführungs- und Dichtungselements (1, 2), wobei das Verfahren die folgenden Schritte aufweist:
a. Einfügen einer stationären Glasscheibe (10) in eine Spritzgussform;
b. Einfügen eines ersten Glasführungsprofils (30), zum Führen einer beweglichen Glasscheibe, in die Spritzgussform;
c. Spritzgießen eines TPE Formstoffs (22) auf zumindest einen Randbereich (12) der stationären Glasscheibe (10), um ein Dichtungsprofil (20) zu erzeugen, das auf die stationäre Glasscheibe (10) überspritzt ist;
d. Spritzgießen des TPE Formstoffs (22) zwischen dem ersten Glasführungsprofil (30) und der stationären Glasscheibe (10), um das erste Glasführungsprofil (30) an die stationäre Glasscheibe (10) zu binden; wobei
e. die Spritzgießschritte während desselben Spritzgussverfahrens durchgeführt werden; **gekennzeichnet durch**
f. Einfügen von zumindest einem Glashalteclip (50, 60) in die Spritzgussform, um die stationäre Glasscheibe (10) während des Spritzgussschritts an ihrer Position zu halten.

10. Verfahren für die Herstellung eines Fahrzeugglasführungs- und Dichtungselements nach Anspruch 9, weiterhin aufweisend den Schritt des Beschichtens der stationären Glasscheibe (10) in den TPE überspritzten Gebieten (12) mit einer Grundierung (40), insbesondere einer Grundierungsflüssigkeit, um die Haftung des TPE Formstoffs (22) und der stationären Glasscheibe (10) zu verbessern.

11. Verfahren für die Herstellung eines Fahrzeugglasführungs- und Dichtungselements nach einem der Ansprüche 9 bis 10 weiterhin aufweisend die Schritte von
a. Einfügen eines oberen Dichtungsprofils (80) in die Spritzgussform; und
b. Spritzgießen des TPE Formstoffs (22) zwischen das obere Dichtungsprofil (80) und der stationären Glasscheibe (10), um das obere Dichtungsprofil (80) an die stationäre Glasscheibe (10) während desselben Spritzgussschritts zu binden.

12. Verfahren für die Herstellung eines Fahrzeugglasführungs- und Dichtungselements nach einem der Ansprüche 9 bis 11, weiterhin aufweisend den Schritt von
a. Einfügen eines zweiten Glasführungsprofils (70) in die Spritzgussform, wobei das zweite Glasführungsprofil (70) verwendet wird zum Führen der beweglichen Glasscheibe; und
b. Spritzgießen des TPE Formstoffs (22) zwischen das zweite Glasführungsprofil (70) und dem oberen Dichtungsprofil (80) zum Verbinden des oberen Dichtungsprofils (80) mit dem zweiten Glasführungsprofil (70) mit Hilfe des TPE Formstoffs (22) während desselben Spritzgußschritts.

13. Verfahren für die Herstellung eines Fahrzeugglasführungs- und Dichtungselements nach einem der Ansprüche 9 bis 12, weiterhin aufweisend den Schritt von einem separaten Erhitzen von Bereichen der Spritzgußform, wobei die Bereiche den Bereichen entsprechen worin der TPE Stoff (22) das erste und/oder das zweite Glasführungsprofil (30, 70) und/oder das obere Dichtungsprofil (80) berührt.

## Revendications

1. Élément de guidage et d'étanchéité pour vitre de véhicule (1, 2) comprenant :
a. un panneau vitré fixe (10) ;
b. au moins un premier profil de guidage de vitre (30) pour le guidage d'un panneau vitré mobile (130) ; et
c. un profil d'étanchéité (20) ; dans lequel
d. le profil d'étanchéité (20) est constitué d'un matériau de moulage en TPE (22) et est surmoulé sur une partie de contour (12) du panneau vitré fixe (10) ; et
e. le premier profil de guidage de vitre (30) est lié au panneau vitré fixe (10) par surmoulage du panneau vitré fixe (10) sous le premier profil de guidage de vitre (30) au moyen du même matériau de moulage en TPE (22) ; **caractérisé par**
f. au moins une agrafe de maintien de vitre (50, 60), l'agrafe de maintien de vitre (50, 60) étant agencée en contact avec le panneau vitré fixe (10).

2. Élément de guidage et d'étanchéité pour vitre de véhicule selon la revendication 1, dans lequel le panneau vitré fixe (10) au niveau des zones de moulage en TPE est revêtu d'un primaire (40), en particulier d'un primaire liquide, pour améliorer l'adhésion du matériau de moulage en TPE (22) et du panneau vitré fixe (10).

3. Élément de guidage et d'étanchéité pour vitre de véhicule selon l'une des revendications 1 à 2, comprenant en outre :
a. un second profil de guidage de vitre (70) pour le guidage du panneau vitré mobile (130), le second profil de guidage de vitre (70) étant relié à l'élément de guidage et d'étanchéité de vitre de véhicule (1, 2) au moyen du même matériau de moulage en TPE (22) et/ou
b. un profil de porte avant (90), le profil avant (90) étant relié à l'élément de guidage et d'étanchéité de vitre de véhicule (1, 2) au moyen du même matériau de moulage en TPE (22).

4. Élément de guidage et d'étanchéité pour vitre de véhicule selon l'une des revendications 1 à 3, dans lequel le profil de guidage de vitre (30, 70) comprend un EPDM, ou un TPE, ou un matériau caoutchouc.

5. Élément de guidage et d'étanchéité pour vitre de véhicule selon l'une des revendications 1 à 4, dans lequel le profil de guidage de vitre (30, 70) comprend en outre :
a. un profil de renfort (34), en particulier un profil de renfort en acier, en aluminium ou en matière plastique ; et/ou
b. une partie de guidage de vitre en forme de U (32, 72) pour recevoir le panneau vitré mobile (130), la partie de guidage de vitre (32, 72) étant recouverte d'un matériau floqué (36) pour réduire le frottement.

6. Élément de guidage et d'étanchéité pour vitre de véhicule selon l'une des revendications 1 à 5, comprenant en outre un profil d'étanchéité haut (80) relié au panneau vitré fixe (10) au moyen du même matériau de moulage en TPE (22).

7. Élément de guidage et d'étanchéité pour vitre de véhicule selon la revendication 6, dans lequel le profil d'étanchéité haut (80) comprend un EPDM ou un caoutchouc et/ou comprend une gorge de réception de vitre (82) pour la réception du panneau vitré mobile.

8. Élément de guidage et d'étanchéité pour vitre de véhicule selon l'une des revendications 6 ou 7, dans lequel le profil d'étanchéité haut (80) comprend en outre un profil de renfort (84), en particulier un profil de renfort en acier, en aluminium, ou en matière plastique.

9. Procédé de production d'un élément de guidage et d'étanchéité de vitre de véhicule (1, 2), le procédé comprenant les étapes suivantes :
a. l'insertion d'un panneau vitré fixe (10) dans une forme de moulage par injection ;
b. l'insertion, dans la forme de moulage par injection, d'un premier profil de guidage de vitre (30) pour le guidage d'un panneau vitré mobile ;
c. le moulage par injection d'un matériau de moulage en TPE (22) sur au moins une partie de contour (12) du panneau vitré fixe (10) afin de produire un profil d'étanchéité (20) qui est surmoulé sur le panneau vitré fixe (10) ;
d. le moulage par injection du matériau de moulage en TPE (22) entre le premier profil de guidage de vitre (30) et le panneau vitré fixe (10) afin de lier le premier profil de guidage de vitre (30) au panneau vitré fixe (10) ; dans lequel
e. les étapes de moulage par injection sont exécutées au cours du même processus de moulage par injection ; **caractérisé par**
f. l'insertion d'au moins une agrafe de maintien de vitre (50, 60) dans la forme de moulage par injection afin de maintenir en place le panneau vitré fixe (10) durant l'étape de moulage par injection.

10. Procédé de production d'un élément de guidage et d'étanchéité de vitre de véhicule selon la revendication 9, comprenant en outre l'étape de revêtement du panneau vitré fixe (10) au niveau des zones de surmoulage en TPE (12) par un primaire (40), en particulier par un primaire liquide, pour améliorer l'adhésion du matériau de moulage en TPE (22) et du panneau vitré fixe (10).

11. Procédé de production d'un élément de guidage et d'étanchéité de vitre de véhicule selon l'une des revendications 9 à 10, comprenant en outre les étapes suivantes :
a. l'insertion d'un profil d'étanchéité haut (80) dans la forme de moulage par injection ; et
b. le moulage par injection du matériau de moulage en TPE (22) entre le profil d'étanchéité haut (80) et le panneau vitré fixe (10) afin de lier le profil d'étanchéité haut (80) au panneau vitré fixe (10) durant la même étape de moulage par injection.

12. Procédé de production d'un élément de guidage et d'étanchéité de vitre de véhicule selon l'une des revendications 9 à 11, comprenant en outre les étapes suivantes :
a. l'insertion d'un second profil de guidage de vitre (70) dans la forme de moulage par injection, le second profil de guidage de vitre (70) étant utilisé pour guider le panneau vitré mobile ; et
b. le moulage par injection du matériau de moulage en TPE (22) entre le second profil de guidage de vitre (70) et le profil d'étanchéité haut (80) pour relier le profil d'étanchéité haut (80) au second profil de guidage de vitre (70) au moyen du matériau de moulage en TPE (22) durant la même étape de moulage par injection.

13. Procédé de production d'un élément de guidage et d'étanchéité de vitre de véhicule selon l'une des revendications 9 à 12, comprenant en outre l'étape de chauffage séparé de zones de la forme de moulage par injection, ces zones correspondant aux zones dans lesquelles le matériau en TPE (22) vient en contact avec le premier et/ou le second profil de guidage de vitre (30, 70) et/ou le profil d'étanchéité haut (80).
